(19) Europäisches Patentamt
European Patent Office
Office européen des brevets

(11) Veröffentlichungsnummer: **0 358 766**
**A1**

(12) # EUROPÄISCHE PATENTANMELDUNG veröffentlicht nach Art. 158 Abs. 3 EPÜ

(21) Anmeldenummer: 88909012.2

(51) Int. Cl.5: A01N 29/02

(22) Anmeldetag: 17.03.88

(86) Internationale Anmeldenummer:
PCT/SU88/00053

(87) Internationale Veröffentlichungsnummer:
WO 89/08392 (21.09.89 89/23)

(43) Veröffentlichungstag der Anmeldung:
21.03.90 Patentblatt 90/12

(84) Benannte Vertragsstaaten:
CH DE FR GB IT LI

(71) Anmelder: VSESOJUZNY NAUCHNO-ISSLEDOVATELSKY INSTITUT SELSKOKHOZYAISTVENNOI BIOTEKHNOLOGII VSESOJUZNOI AKADEMII SELSKOKHOZYAISTVENNYKH NAUK IMENI V.I. LENINA
ul. Pskovskaya 12-4 Moscow, 127253(SU)

Anmelder: INSTITUT ELEMENTOORGANICHESKIKH SOEDINENY IMENI A.N. NESMEYANOVA AKADEMII NAUK SSSR
ul. Vavilova, 28
Moscow, 117813(SU)

Anmelder: VSESOJUZNY NAUCHNO-ISSLEDOVATELSKY INSTITUT IODOBROMNOI PROMYSHLENNOSTI
Krymskaya obl.
Saki-3, 334310(SU)

Anmelder: VSESOJUZNY NAUCHNO-ISSLEDOVATELSKY INSTITUT RASTENIEVODSTVA IMENI N.I. VAVILOVA VSESOJUZNOI AKADEMII SELSKOKHOZYAISTVENNYKH NAUK IMENI V.I. LENINA
ul. gertsena, 44 Leningrad, 190000(SU)

(72) Erfinder: FEDIN, Marat Alexandrovich
ul. Dm.Ulyanova, 24-158
Moscow, 107078(SU)

Erfinder: KUZNETSOVA, Tatyana Alexandrovna
Khoroshevskoe shosse, 36b-62
Moscow, 123007(SU)

Erfinder: VASILIEVA, Tamara Trofimovna
ul. Vinokurova, 17-3-9
Moscow, 113447(SU)

Erfinder: BOGACHUK, Galina Alexandrovna
ul. Internatsionalnaya, 26/19-3
Saki, 334310(SU)

Erfinder: TERENTIEV, Alexandr Borisovich
ul. Vinokurova, 17-3-9
Moscow, 113447(SU)

Erfinder: VELICHKO, Felix Kazimirovich
ul. Akademika Vargi, 24-108
Moscow, 117336(SU)

Erfinder: NELJUBIN, Boris Viktorovich
ul. Lenina, 11-45
Saki, 334310(SU)

Erfinder: UKHANEV, Viktor Pavlovich
ul. Lenina, 11-57
Saki-334310(SU)

Erfinder: VOSKOBOINIK, Leonid Konstantinovich
ul. Pushkina, 35-6
Krasnodar, 350023(SU)

Erfinder: FEDORENKO, Tatyana Sergeevna
ul. Shkolnaya, 11-23
Krasnodar, 350038(SU)

Erfinder: PROKOPENKO, Anna Ivanovna
ul. Peredovaya, 74-24
Krasnodar, 350038(SU)

Erfinder: GERMANOVA, Ljudmila Fedorovna
ul. Nekrasova, 17/1
Evpatoria, 334320(SU)

Erfinder: PAKLIN, Sergei Ivanovich
ul. Malaya Filevskaya, 66-30
Moscow, 121433(SU)

EP 0 358 766 A1

Xerox Copy Centre

Erfinder: **AMINOV, Sabir Nigmatovich**
**ul. Muminova, 1/4-12**
**Tashkent, 700041(SU)**
Erfinder: **RILO, Roman Pavlovich**
**ul. Lenina, 8-45**
**Saki, 334310(SU)**
Erfinder: **SAVCHUK, Valentin A.**
**Opytnaya stantsia VIR Globinsky raion**
**Poltavskaya obl. selo Ustimovka, 315967(SU)**
Erfinder: **KOCHETKOVA, Valentina Alexeevna**
**ul.Stroitelnaya, 19-44**
**Saki, 334310(SU)**
Erfinder: **GYSKA, Mikhail Nikolaevich**

**deceased(SU)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) **VERFAHREN ZUR STERILISATION DER STAUBBEUTEL VON PFLANZEN.**

(57) Das Verfahren zur Sterilisation der Staubbeutel von Pflanzen sieht die Behandlung von Pflanzen mit einem Sterilisationsmittel in Verbindung mit einem Verdünner in der fünften und/oder sechsten Periode der Organogenese vor. Als Sterilisationsmittel werden erfindungsgemäß Polybromalkane oder ihre Chlorderivate der allgemeinen Formel

$C_nH_{2n-x-y}Br_xCl_y$, worin y = 0 bis 2, n = 2 bis 10 und x = 2 bis 4 sind, verwendet.

# VERFAHREN ZUR STERILISATION DER STAUBBEUTEL VON PFLANZEN

## Gebiet der Technik

Die vorliegende Erfindung bezieht sich auf die Biologie und Landwirtschaft, insbesondere auf ein Verfahren zur Sterilisation der Staubbeutel von Pflanzen, welches in der Selektion und im Samenbau zur Verwendung kommt.

## Zugrundeliegender Stand der Technik

Heute wird in der Welt die Aufgabe, die Landwirtschaft zu intensivieren, insbesondere die Ertragsfähigkeit von Getreide-, Futter-, Gemüse- und technischen Kulturen durch breite Verwendung von Hydriden der ersten Generation zu steigern, gelöst. Wegen ihrer Hybridkraft unterscheiden sich die Hybride von den Elternformen in einer höheren Leistung (um 25 bis 30 %) und einer besseren Produktqualität.

Es besteht ein Verfahren zur Erzeugung von neuen Hybriden, welches auf einem System "zytoplasmatische Pollensterilität - Restorer der Fertilität" beruht. Diesem Verfahren liegt eine fortwährende (innerhalb von 12 bis 14 Jahren) und komplizierte Selektionsarbeit zugrunde, die die Entwicklung von sterilen Analoga, Fixatoren der Sterilität und Restorern der Fertilität vorsieht. Besonders aussichtsreich sind Verfahren, die auf der Sterilisation der Staubbeutel von Pflanzen mit chemischen Sterilisationsmitionsmitteln (Gametoziden) basieren. Die Verwendung von Gametoziden ist bedeutend wirtschaftlicher als die Verwendung des Systems "zytoplasmatische Pollensterilität", weil die Notwendigkeit entfällt, solche Formen wie steriles Analogon, Analoga für die Fixierung der Sterilitat bei mütterlichen Formen und für die Restauration der Fertilität bei väterlichen Formen zu erzeugen. Man kann praktisch die Samen von Hybriden der ersten Generation sowohl im Laufe der Selektionsforschung von Ausgangsformen als auch bei der Organisation ihrer technischen Herstellung gewinnen.

Zur Zeit sind etwa 200 Verbindungen gefunden, welche eine gametozide Aktivität besitzen und ihrer chemischen Struktur nach zu verschiedenen Klassen von chemischen Verbindungen gehören. Gametozide müssen die volle Pollensterilität bei behandelten Pflanzen unter Erhaltung der Lebensfähigkeit von Eizellen bewirken und eine ausreichend hohe Fähigkeit (mindenstens 70 % der Kontrolle), den Fruchtknoten unter freier Bestäubung zu bilden, sicherstellen. Die Werte ihrer Phytotoxizität und Toxizität für Warmblüter müssen minimal sein.

Bekannt sind Verfahren zur Sterilisation der Staubbeutel von Getreidekulturen (L.Dzh. Nikell. Regulatory rosta rasteny. Primenenie v selskom khozyaistve. Moskva, izdatelstvo "Kolos", 1984, S. 28-31; SU A 906457. L.J. Nikell. Wachstumsregulatoren von Pflanzen. Anwendung in der Landwirtschaft. Moskau, Verlag "Kolos", 1984, S. 28-31), welche in der Behandlung von Pflanzen mit Sterilisationsmitteln wie 2-Chloräthylphosphonsäure (Ethrel), Meleinsäurehydrazid, Di-(polyfluoralkyl)-phosphorsäuren und ihre Salze u.a. bestehen. Die Behandlung der Pflanzen mit einheimischen Sterilisationsmitteln erfolgt in der V. und oder VI. Periode der Organogenese (nach F.M.Kupermann).

In der V. Periode der Organogenese setzen die Prozesse der Bildung und der Differenzierung von Blüten ein. Gegen Ende dieser Periode entstehen Neubildungen, sporogene Archesporgewebe. Während dieser Periode kommt es zur Anlegung von Staubblättern, Stempel und Blütenhülle. In der V. Periode tritt die Differenzierung des Höckers von Staubblättern in Staubfaden und Stempel in Erscheinung. Die VI. Periode ist durch Ablauf der Prozesse der Blütenbildung (Mikro- und Makrosporogenese) gekennzeichnet. In dieser Periode werden gewöhnlich gesonderte einkernige Pollenkörner gebildet (F.M. Kupermann. Morfofiziologiya rasteny. Moskva, izdatelstvo "Vysshaya shkola", 1973, S. 30-36. Morphophysiologie von Pflanzen, Moskau, Verlag "Wysshaya shkola", 1973, S. 30-36).

Bekannt ist weiter ein Verfahren zur Sterilisation der Staubbeutel von Graspflanzen (GB,A,1567153), das darin besteht, daß man die Behandlung von Graspflanzen mit einem Sterilisationsmittel in der Periode durchführt, die zwischen Auftreten des zweiten Stengelglieds und Ährenschieben liegt. Als Sterilisationsmittel verwendet man heterozyklische Verbindungen, deren Hauptvertreter 2-Karboxy-3,4-Methanpyrrolidin oder 2-Methoxykarbonyl-3,4-methanpyrrolidin sind. Die angegebenen Verbindungen werden in Verbindung mit Verdünnungsmitteln und oberflächenaktiven Stoffen eingesetzt.

## Offenbarung der Erfindung

Der Erfindung liegt die Aufgabe zugrunde, durch die Wahl von Sterilisationsmitteln ein Verfahren zu entwickeln, welches zur Sterilisation der Staubbeutel eines breiten Spektrums von Kulturen mit einer hohen Effektivität der Sterilisation unter Erhaltung der hohen Fähigkeit von Samen, Fruchtansätze bei freier Bestäubung zu bilden, geeignet werden kann.

Diese Aufgabe wird dadurch gelöst, daß im vorgeschlagenen Verfahren zur Sterilisation der Staubbeutel von Pflanzen durch ihre Behandlung mit einem Sterilisationsmittel in Verbindung mit einem Verdünnungsmittel in der fünften und/oder sechsten Periode der Organogenese erfindungsgemäß als Sterilisationsmittel Polybromalkane oder ihre Chlorderivate der allgemeinen Formel

$C_nH_{2n-x-y}Br_xCl_y$, worin y = 0-2, n = 2-10, x =2-4

sind verwendet werden.

Das Sterilisationsmittel kann in Verbindung mit einem beliebigen bekannten und dazu geeigneten Verdünner verwendet werden. Es ist zweckmäßig dieses in Verbindung mit Wasser als 0,1- bis 2%ige wäßrige Emulsion zu verwenden. Als Pflanzen, die mit dem angegebenen Sterilisationsmittel behandelt werden, dienen bevorzugt Graspflanzen oder Sonnenblume.

Das erfindungsgemäße Verfahren ermöglicht, die männliche Sterilität von Pflanzen (98-100 %) zu erzielen und ebene hohe Fähigkeit zur Samenbildung (über 70 %) zu erhalten. Zwecks Erzielung des hohen Sterilisationsgrades von Staubbeuteln unter ungünstigen Klimabedingungen wird die Behandlung von Pflanzen mit dem Sterilisationsmittel in der fünften und/oder sechsten Periode der Organogenese (nach Kupermann) wiederholt.

## Beste Ausführungsform der Erfindung

Das erfindungsgemäße Verfahren wird wie folgt durchgeführt.

Pflanzen wie z.B. Winter- und Sommerweizen, diploider und tetraploider Roggen, Tritikale, Hirse, Sonnenblume, Gräser werden mit einem Sterilisationsmittel behandelt, wobei als solches Polybromalkane oder ihre Chlorderivate der allgemeinen Formel

$$C_nH_{2n-x-y}\,Br_xCl_y,$$

worin y = 0-2, n =2-10, x =2-4 sind, verwendet werden.

Polybromalkane können in Verbindung mit beliebigen geeigneten Verdünnern verwendet werden, als Verdünner ist Wasser zweckmäßigerweise zu verwenden. Dabei ist eine 0,1- bis 2%ige wäßrige Emulsion der angegebenen Verbindungen vorteilhaft zu verwenden.

Man kann den gebrauchsfertigen Lösungen beliebige geeignete oberflächenaktive Stoffe wunschgemäß zusetzen. Beim Aufbringen auf die Pflanzen sind gewöhnlich den gebrauchsfertigen Lösungen beliebige bekannte Hilfszusätze wie Netzmittel, Dispergiermittel und Adhäsionsmittel zweckmäßigerweise hinzuzufügen.

Das Sterilisationsmittel läßt sich auf Pflanzen nach verschiedenen Behandlungsverfahren wie Flüssigkeitszerstäubung und Luftzerstäubung (Aerosole) aufbringen. Die Behandlung von Pflanzen mit dem Sterilisationsmittel erfolgt in der fünften und/oder sechsten Periode der Organogenese (nach Kupermann). Die Aufwanddosis des Sterilisationsmittels hängt von Natur der Verbindung, von zu behandelnder Kultur, Behandlungsperiode und natürlichen Klimafaktoren ab. Um den hohen Sterilisationseffekt unter ungünstigen Klimabedingungen sicherzustellen, ist es zweckmäßig, die wiederholte Behandlung von Pflanzen in der VI. Periode der Organogenese durchzuführen. Die Gesamtdosis des Sterilisationsmittels beträgt 0,6 bis 20 kg/ha.

Alle erfindungsgemäßen Polybromalkane, die als Sterilisationsmittel zur Verwendung kommen, waren auf die Toxizität im Tierversuch geprüft. Die Prüfergebnisse haben ergeben, daß die angegebenen Verbindungen von schwacher oder mittlerer Toxizität sind. So beträgt z.B. $LD_{50}$ bei 1,1,3-Tribrompropan im Mäuseversuch 540 mg/kg Tiergewicht, bei

1,2-Dibrompropan beträgt $LD_{50}$ 200±58 142 mg/kg Tiergewicht, die maximale Arbeitsplatzkonzentration (MAK-Wert) dieser Verbindung ist 5 mg/$m^3$ gleich; bei 1-Chlor-2,3-dibrompropan macht $LD_{50}$ etwa 170 mg/kg Tiergewicht aus; bei 1,3-Dibrompropan beträgt $LD_{50}$ 473± 25 mg/kg Tiergewicht.

Die gametozide Aktivität der erfindungsgemäßen Sterilisationsmittel war in Feldversuchen in verschiedenen bodenklimatischen Zonen mit Teilstücken von 10 $m^2$ Größe in drei- bis viermaliger Wiederholung festgestellt. Jedes Sterilisationsmittel wurde mindenstens 5 Jahre lang geprüft.

Die Entwicklung der Perioden der Organogenese wird zytologisch überwacht. Die Behandlung von Pflanzen mit dem Sterilisationsmittel erfolgt am Anfang der fünften Periode der Organogenese nach Kupermann.

Mit dem Ährenschieben verwirklicht man die Isolierung von Hauptähren und anderen Stockwerken in Pergametbeuteln. Bei Weizen und Tritikale werden Einzelisolatoren benutzt. Bei Roggen schließt man je 1 Ähre von 5 bis 7 verschiedenen nebeneinander befindlichen Pflanzen unter einen gemeinsamen Isolator ein. Bei Hirse wird jede Rispe getrennt isoliert. Der Sterilitätsprozentsatz (X) für Weizen, Roggen, Tritikale und Hirse wird nach der Formel

$$X = \left[ 1 - \frac{\text{Anzahl der in einem Isolator befruchteten Samen von behandelten Pflanzen}}{\text{Anzahl der in einem Isolator befruchteten Samen von unbehandelten Kontrollpflanzen}} \right] .100\ \%$$

ermittelt.

Die Kornzahl in nicht isolierten Ähren von Kontrollpflanzen wird bedingt für 100 % Ansetzen bei freier Bestäubung angenommen.

Um zuverlässige Angaben zu erhalten, verwendet man 20 bis 25 Isolatoren je Wiederholung für Weizen und Tritikale, 10 bis 15 Isolatoren jeder Wiederholung für Roggen und Hirse.

Zur Kontrolle der chemischen Sterilisation des Sonnenblumenpollens werden für jede Verbindung 45 behandelte Pflanzen je Wiederholung benutzt, wobei 15 Pflanzen zwecks Selbstbestäubung des Blütenkörbchens isoliert werden, 15

Pflanzen mit einem Pollengemisch, gesammelt von 20 bis 25 behandelten isolierten Körbchen, bestäubt werden, und 15 Pflanzen für freie Bestäubung gelassen werden, damit das Ansetzen von Achänen mit dem Pollen der Vaterform kontrolliert worden kann.

Man beurteilt die Pollensterilität von Pflanzen der Sonnenblume nach der Pollenfertilität und -keimfähigkeit, nach den morphologischen Besonderheiten von Spermien und nach der Fähigkeit von Achänen zum Ansetzen zum Ansetzen bei der Bestäubung der behandelten isolierten Pflanzen mit dem Pollen der unbehandelten väterlichen Form. Die Lebensfähigkeit der Eizelle wird nach der Samenbildung bei behandelten Pflanzen bei freier Bestäubung der väterlichen Form bestimmt.

Es ist wünschenswert, die Behandlung von Pflanzen bei heiterem windstillem Wetter durchzuführen.

Polybromalkane oder ihre Chlorderivate werden nach der bekannten Technologie durch Addition oder Telomerisation bromhaltiger Produkte und ungesättigter aliphatischer Kohlenwasserstoffe hergestellt.

Zum besseren Verstehen der vorliegenden Erfindung werden folgende Ausführungsvarianten des erfindungsgemäßen Verfahrens angeführt.

Beispiel 1

Pflanzen des Winterweizens Sorte Mironowskaya 808 werden in der V.Periode der Organogenese durch Zerstäubung der 2%igen wäßrigen Emulsion von 1,13-Tribrompropan mit Hilfe einer Rückenspritze behandelt.

Als Emulgierungsmittel setzt man 0,5 Masse% $C_{12}$-$C_{14}$--Kalziumalkylbenzolsulphonat zu. Als Adjuvans enthält die Emulsion 0,01 Masse% Dimethylsulfoxid. Der Verbrauch an Präparat beträgt 20 kg/ha bei 1000 Liter Wasserdurchsatz. Als Kontrolle dienen Pflanzen, behandelt mit einem Verdünner ohne Sterilisationsmittel. Die Ergebnisse sind in der Tabelle 1 angegeben.

Beispiele 2-3

Der Prozeß wird analog zu dem in Beispiel 1 beschriebenen durchgeführt. Als Sterilisationsmittel verwendet man

eine 2%ige waßrige Emulsion von 1,1,3-Tribrom-4-chlorbutan, 1,1,2,3-Tetrabrompropan. Die Prüfergebnisse sind in der Tabelle 1 angegeben.

Beispiele 4-11

Der Prozeß wird analog zu dem in Beispiel 1 beschriebenen durchgeführt, nur daß man 1%ige wäßrige Emulsion von 1,2,3-Tribrompropan, 1,2-Dibrompropan, 1,1,3-Tribrom-3--chlorpropan, 1,2-Dibrom-3-chlorpropan, 1,3-Dibrompropan, 1,1,1,3-Tetrabromheptan, 1,1,3-Tribromheptan, 1,2-Dibromheptan verwendet. Die Präparatdosis beträgt 10 kg ha. Die Prüfergebnisse sind in der Tabelle 1 angegeben. Die gleichen Ergebnisse sind bei der Behandlung des Weizens Sorte Mironowskaya 808 in der VI. Periode der Organogenese erhalten.

Tabelle 1

| lfd. Nr. | Beispiel-Nr. | Kornzahl der Ähre im Isolator | Prozentsatz der Sterilität % | Kornzahl der Ähre bei freier Bestäubung | Prozentsatz des Ansetzens von Samen bei freier Bestäubung | Konzentration des Sterilisationsmittels in der gebrauchsfertigen Lösung in Masse% |
|---|---|---|---|---|---|---|
| 1. | Kontrolle | 44,4 | 0,0 | 45,0 | 100,0 | - |
| 2. | Beispiel 1 | 0,9 | 98,0 | 40,3 | 84,0 | 2% |
| 3. | Beispiel 2 | 1,1 | 97,3 | 41,3 | 86,0 | 2% |
| 4. | Kontrolle | 37,2 | 0,0 | 37,3 | 100 | - |
| 5. | Beispiel 3 | 1,0 | 97,3 | 35,1 | 94,1 | 2% |
| 6. | Beispiel 4 | 0,0 | 100,0 | 34,8 | 93,3 | 1% |
| 7. | Beispiel 5 | 0,1 | 99,7 | 36,7 | 98,4 | 1% |
| 8. | Beispiel 6 | 1,2 | 96,8 | 37,0 | 99,2 | 1% |
| 9. | Beispiel 7 | 0,0 | 100,0 | 33,8 | 90,6 | 1% |
| 10. | Kontrolle | 39,7 | 0,0 | 41,6 | 100,0 | - |
| 11. | Beispiel 8 | 0,0 | 100,0 | 38,7 | 93,0 | 1% |
| 12. | Beispiel 9 | 0,2 | 99,5 | 31,4 | 75,5 | 1% |
| 13. | Beispiel 10 | 0,6 | 98,4 | 40,0 | 96,2 | 1% |
| 14. | Beispiel 11 | 0,0 | 100,0 | 39,7 | 95,4 | 1% |

Beispiele 12-21

Pflanzen des Sommerweizens Sorte Moskowskaya 35 werden in der V. Periode der Organogenese (nach Kupermann) mit

einer 1%igen wäßrigen Emulsion von 1,1,3-Tribrompropan, 1,1,3-Brom-4-chlorbutan, 1,1,2,3-Tetrabrompropan, 1,2,3-Tribrompropan, 1,2-Dibrompropan, 1,1,3-Tribrom-3-chlorpropan, 1,2-Dibrom-3-chlorpropan, 1,3-Dibrompropan, 1,1,1,3-Tetrabromheptan bzw. 1,1,3-Tribromheptan behandelt. Die Emulsion enthält als Emulgierungsmittel 0,5 Masse% $C_{12}$-$C_{14}$-Kalziumalkylbenzolsulfonat und als Adjuvans 0,01 Masse% Dimethylformamid. Der Verbrauch an Präparat beträgt 6 kg/ha bei 600 l Wasserdurchsatz. Als Kontrolle dienen Pflanzen, behandelt mit dem Verdünner ohne Sterilisationsmittel.

Die Prüfergebnisse sind in der Tabelle 2 angegeben. Die gleichen Ergebnisse sind bei der Behandlung des Sommerweizens Sorte Moskowskaya 35 in der VI.Periode der Organogenese erhalten.

Tabelle 2

| lfd. Nr. | Beispiel-Nr. | Kornzahl der Ähre im Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 32,2 | 0,0 | 38,2 | 100,0 |
| 2 | Beispiel 12 | 0,7 | 99,9 | 34,2 | 89,5 |
| 3 | Beispiel 13 | 0,6 | 99,2 | 36,5 | 95,5 |
| 4 | Beispiel 14 | 0,3 | 99,1 | 31,8 | 83,2 |
| 5 | Beispiel 15 | 0,0 | 100,0 | 34,1 | 89,3 |
| 6 | Beispiel 16 | 0,0 | 100,0 | 33,6 | 87,9 |
| 7 | Beispiel 17 | 1,2 | 96,3 | 37,8 | 98,9 |
| 8 | Beispiel 18 | 0,0 | 100,0 | 33,8 | 88,5 |
| 9 | Beispiel 19 | 0,0 | 100,0 | 32,7 | 85,6 |
| 10 | Beispiel 20 | 0,1 | 99,9 | 35,8 | 93,7 |
| 11 | Beispiel 21 | 0,1 | 99,8 | 36,2 | 94,7 |

Beispiele 22-25

Pflanzen des Sommerweizens Sorte Rodina werden in der V.Periode der Organogenese (nach Kupermann) mit einer 1%igen wäßrigen Emulsion von 1,3-Dibrompropan, 1,1,1,3-Tetrabromheptan, 1,1,3-Tribromheptan bzw. 1,2-Dibromheptan behandelt.

Die Emulsion enthalt 0,5 Masse% $C_{12}$-$C_{14}$ Kalziumalkylbenzolsulfonat und 0,01 Masse% Dodezylsulfat. Der Verbrauch an Präparat beträgt 6 kg/ha bei 600 l Wasserdurchsatz. Als Kontrolle dienen Pflanzen, behandelt mit dem Verdünner ohne Sterilisationsmittel.

Die Prüfergebnisse sind in der Tabelle 3 angegeben. Die gleichen Ergebnisse sind bei der Behandlung des Sommerweizens Sorte Rodina in der VI. Periode der Organogenese erhalten.

Tabelle 3

| lfd. Nr. | Beispiel-Nr. | Kornzahl der Ähre im Isolator | Prozentsatz der Sterilität | Kornzahl der Ähre bei freier Bestäubung | Prozentsatz des Ansetzens von freier Bestäubung |
|---|---|---|---|---|---|
| 1 | Kontrolle | 35,7 | 0,0 | 40,4 | 100, 0 |
| 2 | Beispiel 22 | 0,0 | 100,0 | 37,1 | 91,8 |
| 3 | Beispiel 23 | 0,0 | 100,0 | 35,4 | 87,6 |
| 4 | Beispiel 24 | 0,0 | 100,0 | 33,8 | 83,7 |
| 5 | Beispiel 25 | 0,0 | 100,0 | 32,7 | 80,9 |

Beispiele 26-29

Pflanzen des Sommerweizens Sorte Botanicheskaya 4 werden in der V. Periode der Organogenese (nach Kupermann) mit einer 1%igen wäßrigen Emulsion von 1,3-Dibrompropan, 1,1,1,3-Tetrabromheptan, 1,1,2-Tribromheptan bzw. 1,2-Dibromheptan behandelt. Die Emulsion enthält 0,5 Masse% $C_{12}$-$C_{14}$-Kalziumalkylbenzolsulfonat und 0,01 Masse% Dimethylsulfoxid als Adjuvans. Der Verbrauch an Präparat beträgt 6 kg/ha bei 600 l Wasserdurchsatz. Als Kontrolle dienen Pflanzen, behandelt mit dem Verdünner ohne Sterilisationsmittel.

Die Prüfergebnisse sind in der Tabelle 4 angegeben. Die gleichen Ergebnisse sind bei der Behandlung des Sommerweizens Sorte Botanicheskaya 4 in der VI. Periode der Organogenese erhalten.

Tabelle 4

| lfd. Nr. | Beispiel-Nr. | Kornzahl der Ähre im Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 28,9 | 0,0 | 30,9 | 100, 0 |
| 2 | Beispiel 26 | 0,0 | 100,0 | 24,7 | 79,9 |
| 3 | Beispiel 27 | 0,0 | 100,0 | 28,1 | 90,9 |
| 4 | Beispiel 28 | 0,0 | 100,0 | 29,2 | 94,5 |
| 5 | Beispiel 29 | 0,0 | 100,0 | 23,6 | 76,4 |

Beispiele 30-33

Pflanzen von Tritikale PRAG-109 werden in der V.Periode der Organogenese (nach Kupermann) mit einer 1%igen wäßrigen Emulsion von 1,1,1,3-Tetrabromheptan, 1,1,3-Tribromheptan, 1,2,3-Tribrompropan bzw. 1,2-Dibrom-3-chlorpropan behandelt. Die Emulsion enthält 0,5 Masse% $C_{12}$-$C_{14}$--Kalziumalkylbenzolsulfonat und 0,01 Masse% Dodezylsulfat. Der Verbrauch an Präparat beträgt 6 kg/ha bei 600 l Wasserdurchsatz. Als Kontrolle dienen Pflanzen, behandelt mit dem Verdünner ohne Sterilisationsmittel. Die Prüfergebnisse sind in der Tabelle 5 angegeben. Die gleichen Ergebnisse sind bei der Behandlung von Tritikale PRAG-109 in der VI. Periode der Organogenese erhalten.

Tabelle 5

| lfd. Nr. | Beispiel-Nr. | Kornzahl der Ähre im Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 62,2 | 0,0 | 69,0 | 100,0 |
| 2 | Beispiel 30 | 0,0 | 100,0 | 61,8 | 89,6 |
| 3 | Beispiel 31 | 0,0 | 100,0 | 59,6 | 86,4 |
| 4 | Kontrolle | 41,3 | 0,0 | 45,8 | 100,0 |
| 5 | Beispiel 32 | 0,2 | 99,5 | 40,5 | 88,4 |
| 6 | Beispiel 33 | 1,1 | 97,3 | 42,6 | 93,0 |

Beispiele 34-35

Pflanzen von Tritikale Ampfindiploid 206 werden in der V.Periode der Organogenese (nach Kupermann) mit einer 1%igen wäßrigen Emulsion von 1,1,3-Tribrompropan bzw. 1,2-Dibromheptan behandelt. Die Emulsion enthält 0,5 Masse% $C_{12}$-$C_{14}$-Kalziumalkylbenzolsulfonat und 0,01 Masse% Dimethylformamid. Der Verbrauch an Präparat beträgt 6 kg/ha bei 600 l Wasserdurchsatz. Die Prüfergebnisse sind in der Tabelle 6 angegeben.

Die gleichen Ergebnisse sind bei der Behandlung von Tritikale Amphidiploid 206 in der VI. Periode der Organogenese erhalten.

Tabelle 6

| lfd. Nr. | Beispiel-Nr. | Kornzahl der Ähre im Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 28,6 | 0,0 | 36,6 | 100,0 |
| 2 | Beispiel 34 | 0,0 | 100,0 | 30,1 | 82,2 |
| 3 | Beispiel 35 | 0,0 | 100,0 | 29,2 | 79,8 |

Beispiele 36-41

Pflanzen von tetraploidem Roggen Belta werden in der V.Periode der Organogenese (nach Kupermann) mit einer 1%igen wäßrigen Emulsion von 1,1,3-Tribrompropan, 1,1,3-Tribrom-4-chlorbutan, 1,1,2,3-Tetrabrompropan, 1,2,3-Tribrompropan, 1,1,3-Tribrom-3-chlorpropan bzw. 1,2-Dibrom-3-chlorpropan behandelt.

Die Emulsion enthält 0,5 Masse% $C_{12}$-$C_{14}$-Kalziumalkylbenzolsulfonat und 0,01 Masse% Dimethylsulfoxid. Der Verbrauch an Präparat beträgt 6 kg/ha bei 600 l Wasserdurchsatz.Die Prüfergebnisse sind in der Tabelle 7 angegeben. Die gleichen Ergebnisse sind bei der Behandlung von tetraploidem Roggen Belta in der VI. Periode der Organogenese erhalten.

Tabelle 7

| lfd. Nr. | Beispiel-Nr. | Kornzahl der Ähre im Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 39,9 | 0,0 | 44,2 | 100,0 |
| 2 | Beispiel 36 | 1,2 | 97,0 | 34,5 | 78,1 |
| 3 | Beispiel 37 | 0,8 | 98,0 | 42,6 | 96,4 |
| 4 | Beispiel 38 | 0,6 | 98,5 | 40,1 | 90,7 |
| 5 | Beispiel 39 | 0,0 | 100,0 | 42,0 | 95,0 |
| 6 | Beispiel 40 | 0,1 | 99,9 | 39,8 | 90,0 |
| 7 | Beispiel 41 | 0,0 | 100,0 | 37,4 | 84,6 |

Beispiele 42-44

Pflanzen von tetraploidem Roggen Ukrainskaya tetra werden in der V.Periode der Organogenese (nach Kupermann) mit einer 1%igen wäßrigen Emulsion von 1,2,3-Tribrompropan, 1,2-Dibrompropan bzw. 1,2-Dibrom-3-chlorpropan behandelt. Die Emulsion enthält 0,5 Masse% $C_{12}$-$C_{14}$-Kalziumalkylbenzolsulfonat und 0,01 Masse% Tetrahydrofuran. Der Verbrauch an Präparat beträgt 6 kg/ha bei 600 l Wasserdurchsatz. Als Kontrolle dienen Pflanzen, behandelt mit dem Verdünner ohne Sterilisationsmittel. Die Prüfergebnisse sind in der Tabelle 8 angegeben. Die gleichen Ergebnisse sind bei der Behandlung von tetraploidem Roggen Ukrainskaya in der VI. Periode der Organogenese erhalten.

Tabelle 8

| lfd. Nr. | Beispiel-Nr. | Kornzahl der Ähre unter Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 48,9 | 0,0 | 51,6 | 100,0 |
| 2 | Beispiel 42 | 0,0 | 100,0 | 48,6 | 94,2 |
| 3 | Beispiel 43 | 0,3 | 99,4 | 47,5 | 92,1 |
| 4 | Beispiel 44 | 0,6 | 98,8 | 45,8 | 88,7 |

Beispiele 45-47

Pflanzen von tetraploidem Roggen Jubileinaya werden in der V. Periode der Organogenese mit einer 1%igen wäßrigen Emulsion von 1,2,3-Tribrompropan, 1,2-Dibrompropan bzw. 1,2-Dibrom-3-chlorpropan behandelt. Die Emulsion enthält 0,5 Masse% $C_{12}$-$C_{14}$-Kalziumalkylbenzolsulfonat und 0,01 Masse% Dodezylsulfat. Der Verbrauch an Präparat beträgt 8 kg/ha bei 800 l Wasserdurchsatz. Die Prüfergebnisse sind in der Tabelle 9 angegeben. Die gleichen Ergebnisse sind bei der Behandlung von tetraploidem Roggen Jubileinaya in der VI. Periode der Organogenese erhalten.

Tabelle 9

| lfd. Nr. | Beispiel-Nr. | Kornzahl der Ähre unter Isolator | Prozentsatz der Sterilität | Kornzahl der Ähre bei freier Bestäubung | Prozentsatz des Ansetzens Samen bei freier Bestäubung |
|---|---|---|---|---|---|
| 1 | Kontrolle | 50,2 | 0,0 | 52,7 | 100,0 |
| 2 | Beispiel 45 | 0,1 | 99,8 | 47,6 | 90,3 |
| 3 | Beispiel 46 | 0,0 | 100,0 | 48,1 | 91,2 |
| 4 | Beispiel 47 | 0,4 | 99,2 | 50,2 | 95,2 |

Beispiele 48-50

Pflanzen von tetraploidem Roggen Gibrid 67 werden in der V.Periode der Organogenese mit einer 1%igen wäßrigen Emulsion von 1,2,3-Tribrompropan, 1,2-Dibrompropan bzw. 1,2-Dibrom-3-chlorpropan behandelt. Die Emulsion enthält 0,5 Masse% $C_{12}$-$C_{14}$-Kalziumalkylbenzolsulfonat und 0,01 Masse% Dimethylsulfoxid. Der Verbrauch an Präparat beträgt 10 kg/ha. Die Prüfergebnisse sind in der Tabelle 10 angegeben. Die gleichen Ergebnisse sind bei der Behandlung von tetraploidem Roggen Gibrid 67 in der VI. Periode der Organogenese erhalten.

Tabelle 10

| lfd. Nr. | Beispiel-Nr. | Kornzahl der Ähre im Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 42,6 | 0,0 | 49,5 | 100,0 |
| 2 | Beispiel 48 | 0,6 | 98,6 | 40,6 | 82,0 |
| 3 | Beispiel 49 | 0,2 | 99,5 | 42,7 | 86,3 |
| 4 | Beispiel 50 | 0,0 | 100,0 | 45,2 | 91,3 |

Beispiele 51-61

Pflanzen von diploidem Roggen Chulpan werden in der V.Periode der Organogenese mit einer 1%igen wäßrigen Emulsion von 1,1,3-Tribrompropan, 1,1,3-Tribrom-4-chlorbutan, 1,1,2,3-Tetrabrompropan, 1,2,3-Tribrompropan, 1,2-Dibrompropan, 1,1,3-Tribrom-3-chlorpropan, 1,2-Dibrom-3--chlorpropan, 1,3-Dibrompropan, 1,1,1,3-Tetrabromheptan, 1,1,3-Tribromheptan bzw. 1,2-Dibromheptan behandelt. Die Emulsion enthält 0,5 Masse% $C_{12}$-$C_{14}$-Kalziumalkylbenzolsulfonat und 0,01 Masse% Dimethylsulfoxid. Der Verbrauch an Präparat beträgt 10 kg/ha. Die Prüfergebnisse sind in der Tabelle 11 angegeben. Die gleichen Ergebnisse sind bei der Behandlung von diploidem Roggen Chulpan in der VI. Pe-

riode der Organogenese erhalten.

Tabelle 11

| lfd. Nr. | Beispiel-Nr. | Kornzahl der Ähre im Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 47,2 | 0,0 | 50,1 | 100,0 |
| 2 | Beispiel 51 | 0,2 | 99,6 | 46,5 | 92,8 |
| 3 | Beispiel 52 | 1,0 | 98,0 | 47,8 | 95,4 |
| 4 | Beispiel 53 | 0,4 | 99,2 | 44,3 | 88,4 |
| 5 | Beispiel 54 | 0,0 | 100,0 | 45,0 | 89,8 |
| 6 | Beispiel 55 | 0,0 | 100,0 | 48,2 | 96,2 |
| 7 | Beispiel 56 | 0,6 | 98,8 | 47,7 | 95,2 |
| 8 | Beispiel 57 | 0,0 | 100,0 | 42,5 | 84,8 |
| 9 | Beispiel 58 | 0,1 | 99,8 | 41,7 | 83,2 |
| 10 | Beispiel 59 | 0,2 | 99,6 | 48,9 | 97,6 |
| 11 | Beispiel 60 | 0,3 | 99,4 | 46,3 | 92,4 |
| 12 | Beispiel 61 | 0,0 | 100,0 | 48,3 | 96,4 |

Beispiele 62-65

Pflanzen von diploidem Roggen Gibrid 1864/79 werden in der V. Periode der Organogenese mit einer 1%igen wäßrigen Emulsion von 1,2,3-Tribrompropan, 1,2-Dibrompropan, 1,1,1,3-Tetrabromheptan, 1,1,3-Tribromheptan behandelt. Die Emulsion enthält 0,5 Masse% $C_{12}$-$C_{14}$-Kalziumalkylbenzolsulfonat und 0,01 Masse% Äthylenglykol. Der Verbrauch an Präparat beträgt 6 kg/ha bei 600 l Wasserdurchsatz. Die Prüfergebnisse sind in der Tabelle 12 angegeben. Die gleichen Ergebnisse sind bei der Behandlung von diploidem Roggen Gibrid 1864/79 in der VI. Periode der Organogenese erhalten.

Tabelle 12

| lfd. Nr. | Beispiel-Nr. | Kornzahl der Ähre unter Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 41,1 | 0,0 | 47,8 | 100,0 |
| 2 | Beispiel 62 | 0,0 | 100,0 | 42,1 | 88,0 |
| 3 | Beispiel 63 | 0,0 | 100,0 | 46,4 | 97,1 |
| 4 | Beispiel 64 | 0,0 | 100,0 | 49,2 | 103,0 |
| 5 | Beispiel 65 | 0,0 | 100,0 | 52,6 | 109,8 |

Beispiele 66-73

Pflanzen von diploidem Roggen Kharkovskaya 55 werden in der V. Periode der Organogenese mit einer 1%igen wäßrigen Emulsion von 1,1,3-Tribrompropan, 1,2,3-Tribrompropan, 1,2-Dibrompropan, 1,1,3-Tribrom-3-chlorpropan, 1,2-Dibrom-3-chlorpropan, 1,1,1,3-Tetrabromheptan, 1,1,3-Tribromheptan bzw. 1,2-Dibromheptan behandelt. Die Emulsion enthält 0,5 Masse% $C_{12}$-$C_{14}$-Kalziumalkylbenzolsulfonat und 0,01 Masse% Dimethylformamid als Adjuvans. Der Verbrauch an Präparat beträgt 6 kg/ha bei 600 l Wasserdurchsatz. Die Prüfergebnisse sind in der Tabelle 13 angegeben. Die gleichen Ergebnisse sind bei der Behandlung von diploidem Roggen Kharkovskaya 55 in der VI. Periode der Organogenese erhalten.

Tabelle 13

| lfd. Nr. | Beispiel-Nr. | Kornzahl der Ähre im Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | 2 | 3 | 4 | 5 | 6 |
| 1 | Kontrolle | 42,1 | 0,0 | 45,1 | 100,0 |

Fortsetzung der Tabelle 13

| 1 | 2 | 3 | 4 | 5 | 6 |
|---|---|---|---|---|---|
| 2 | Beispiel 66 | 1,2 | 97,2 | 43,1 | 95,6 |
| 3 | Beispiel 67 | 0,6 | 98,6 | 40,5 | 89,8 |
| 4 | Beispiel 68 | 0,8 | 98,1 | 42,8 | 94,9 |
| 5 | Beispiel 69 | 0,1 | 99,8 | 41,7 | 92,5 |
| 6 | Beispiel 70 | 0,0 | 100,0 | 39,5 | 87,6 |
| 7 | Beispiel 71 | 0,0 | 100,0 | 37,1 | 100,0 |
| 8 | Beispiel 72 | 0,1 | 99,8 | 36,2 | 97,8 |
| 9 | Beispiel 73 | 0,0 | 100,0 | 34,0 | 91,6 |

Beispiele 74-76

Pflanzen von diploidem Roggen Voskhod 2 werden in der V. Periode der Organogenese mit einer 1%igen wäßrigen Emulsion von 1,1,3-Tribrompropan, 1,1,3-Tribrom-4-chlorbutan bzw. 1,1,2,3-Tetrabrompropan behandelt. Die Emulsion enthält 0,5 Masse% $C_{12}$-$C_{14}$-Kalziumalkylbenzolsulfonat und 0,01 Masse% Dimethylformamid. Der Verbrauch an Präparat beträgt 10 kg/ha bei 1000 l Wasserdurchsatz. Die Prüfergebnisse sind in der Tabelle 14 angegeben. Die gleichen Ergebnisse sind bei der Behandlung von diploidem Roggen Voskhod 2 in der VI. Periode der Organogenese erhalten..

Tabelle 14

| lfd. Nr. | Beispiel-Nr. | Kornzahl der Ähre unter Isolator | Prozentsatz der Sterilität | Kornzahl der Ähre bei freier Bestäubung | Prozentsatz des Ansetzens von Samen bei freier Bestäubung |
|---|---|---|---|---|---|
| 1 | Kontrolle | 49,0 | 0,0 | 54,6 | 100,0 |
| 2 | Beispiel 74 | 0,9 | 98,2 | 48,6 | 89,0 |
| 3 | Beispiel 75 | 1,0 | 97,2 | 52,4 | 96,0 |
| 4 | Beispiel 76 | 0,2 | 99,6 | 45,7 | 83,7 |

Beispiele 77-84

Pflanzen der Hirse Sorte Mironovskoye 94 werden in der V.Periode der Organogenese mit einer 1%igen wäßrigen Emulsion von 1,1,3-Tribrompropan, 1,2,3-Tribrompropan, 1,2-Dibrompropan, 1,2-Dibrom-3-chlorpropan, 1,3-Dibrompropan, 1,1,1,3-Tetrabromheptan, 1,1,3-Tribromheptan, 1,2-Dibromheptan behandelt. Die Emulsion enthält 0,5 Masse% $C_{12}$-$C_{14}$--Kalziumalkylbenzolsulfonat und 0,01 Masse% Dimethylsulfoxid als Adjuvans. Der Verbrauch an Präparat beträgt 6 kg/ha bei 600 l Wasserdurchsatz. Die Prüfergebnisse sind in der Tabelle 15 angegeben. Die gleichen Ergebnisse sind bei der Behandlung der Hirse Sorte Mironovskoye 94 in der VI. Periode der Organogenese erhalten.

Tabelle 15

| lfd. Nr. | Beispiel-Nr. | Kornzahl der Rispe im Isolator | Prozentsatz der Sterilität | Kornzahl der Rispe bei freier Bestäubung | Prozentsatz des Ansetzens von Samen bei freier Bestäubung |
|---|---|---|---|---|---|
| 1 | Kontrolle | 228,0 | 0,0 | 244,7 | 100,0 |
| 2 | Beispiel 77 | 0,0 | 100,0 | 175,1 | 71,6 |
| 3 | Beispiel 78 | 0,0 | 100,0 | 147,5 | 60,2 |
| 4 | Beispiel 79 | 0,0 | 100,0 | 160,3 | 65,5 |
| 5 | Beispiel 80 | 0,0 | 100,0 | 202,6 | 82,8 |
| 6 | Beispiel 81 | 0,0 | 100,0 | 212,7 | 86,9 |
| 7 | Beispiel 82 | 0,0 | 100,0 | 200,7 | 81,7 |
| 8 | Beispiel 83 | 0,0 | 100,0 | 180,1 | 73,6 |
| 9 | Beispiel 84 | 0,0 | 100,0 | 159,6 | 65, 2 |

Beispiele 85-86

Pflanzen der Sonnenblume Sorte Peredovik werden in der V. Periode der Organogenese (nach Kupermann) mit einer 0,2%igen wäßrigen Emulsion von 1,1,3-Tribrompropan, 1,2--Dibrompropan behandelt. Die Emulsion enthält 0,5 Masse% $C_{12}$-$C_{14}$-Kalziumalkylbenzolsulfonat und 0,01 Masse% Dimethylsulfoxid als Adjuvans. Der Verbrauch an Präparat beträgt 1,2 kg/ha bei 600 l Wasserdurchsatz. Die Prüfergebnisse sind in der Tabelle 16 angegeben. Die gleichen Ergebnisse sind bei der Behandlung der Sonnenblume Sorte Peredovik in der VI. Periode der Organogenese erhalten.

Beispiel 87

Man verfährt analog den Beispielen 85 und 86. Als Sterilisationsmittel dient eine 0,1%ige wäßrige Emulsion von 1,2-Dibrom-3-chlorpropan. Der Verbrauch an Präparat beträgt 1,0 kg/ha. Die Prüfergebnisse sind in der Tabelle 16 angegeben.

Tabelle 16

| lfd. Nr. | Beispiel-Nr. | Ansetzen im Isolator bei Pollengemischbestäubung in % | Ansetzen bei freier Bestäubung in % | Masse von 1000 Achänen | Ölgehalt von Achänen in % |
|---|---|---|---|---|---|
| 1 | Kontrolle | 85,0 | 85,0 | 84,0 | 54,7 |
| 2 | Beispiel 85 | 0,0 | 78,7 | 80,4 | 54,5 |
| 3 | Beispiel 86 | 0,0 | 84,5 | 82,7 | 53,2 |
| 4 | Beispiel 87 | 0,0 | 81,4 | 89,0 | 53,5 |
| 1 | 2 | 3 | 4 | 5 | 6 |

Fortsetzung der Tabelle 16

| lfd. | Keimung von Achänen in % | Pollenleistung in % | Pollensterilität in % | Konzentration des Sterilisationsmittels in Masse% |
|---|---|---|---|---|
| 1 | 7 | 8 | 9 | 10 |
| 1 | 100,0 | 100,0 | 0,2 | - |
| 2 | 100,0 | 30,0 | 100,0 | 0,2 |
| 3 | 100,0 | 13,1 | 100,0 | 0,2 |
| 4 | 100,0 | 0,0 | 100,0 | 0,1 |

Beispiele 88-89

Pflanzen der Sonnenblume Linie BK 119 werden mit einer 0,2%igen wäßrigen Emulsion von 1,1,3-Tribrompropan bzw. 1,2-Dibrompropan behandelt. Die Emulsion enthält 0,5 Masse% $C_{12}$-$C_{14}$ Natriumalkylbenzolsulfonat und 0,01 Masse% Dimethylformamid als Adjuvans. Der Verbrauch an Präparat beträgt 1,2 kg/ha bei 600 l Wasserdurchsatz. Die Prüfergebnisse sind in der Tabelle 17 angegeben. Die gleichen Ergebnisse sind bei der Behandlung von Sonnenblume Linie BK in der VI. Periode der Organogenese erhalten.

Beispiel 90

Man verführt analog den Beispielen 88-89. Als Sterilisationsmittel dient eine 0,1%ige wäßrige Emulsion von 1,2-Dibrom-3-chlorpropan. Der Verbrauch an Präparat beträgt 0,6 kg/ha bei 600 l Wasserdurchsatz. Die Prüfergebnisse sind in der Tabelle 17 angegeben.

Tabelle 17

| lfd. Nr. | Beispiel-Nr. | Ansetzen im Isolator bei Pollengemischbestäubung in % | Ansetzen bei freier Bestäubung in % | Masse von 1000 Achänen in % |
|---|---|---|---|---|
| 1 | 2 | 3 | 4 | 5 |
| 1 | Kontrolle | 72,6 | 85,0 | 60,0 |
| 2 | Beispiel 88 | 0,0 | 80,4 | 56,7 |
| 3 | Beispiel 89 | 0,0 | 88,2 | 59,5 |
| 4 | Beispiel 90 | 0,0 | 82,0 | 54,0 |

Fortsetzung der Tabelle 17

| lfd. Nr. | Ölgehalt von Achänen in g | Keimung von Achänen in % | Pollensterilität in % | Konzentration des Sterilisationsmitels in % |
|---|---|---|---|---|
| I. | 6 | 7 | 8 | 9 |
| 1 | 51,0 | 98,2 | 2,0 | - |
| 2 | 51,1 | 96,6 | 100,0 | 0,2 |
| 3 | 50,3 | 100,0 | 100,0 | 0,2 |
| 4 | 51,6 | 99,3 | 100,0 | 0,1 |

## Industrielle Verwertbarkeit

Das erfindungsgemäße Verfahren findet seine Anwendung in der Selektion und im Samenbau zur Herstellung von hochproduktiven Sorten und Hybriden der landwirtschaftlichen Kulturen.

## PATENTANSPRÜCHE

1. Verfahren zur Sterilisation der Staubbeutel von Pflanzen durch ihre Behandlung mit einem Sterilisationsmittel in Verbindung mit einem Verdünner in der fünften und/oder sechsten Periode der Organogenese, dadurch gekennzeichnet, daß als Sterilisationsmittel Polybromalkane oder ihre Chlorderivate der allgemeinen Formel

$C_nH_{2n-x-y}Br_xCl_y$, worin y=0 bis 2, n=2 bis 10, x = 2 bis 4 sind verwendet werden.

2. Verfahren nach Anspruch 1, dadurch gekennzeichnet, daß die angegebenen Polybromalkane in Verbindung mit einem Verdünner und zwar Wasser in Form einer 0,1- bis 2%igen wäßrigen Emulsion verwendet werden.

3. Verfahren nach einem beliebigen der Ansprüche 1 bis 2, dadurch gekennzeichnet, daß man als mit dem Sterilisationsmittel zu behandelnde Pflanzen Gräser und Sonnenblume verwendet.

4. Verfahren nach Anspruch 3, dadurch gekennzeichnet, daß man zur Erzielung eines hohen Sterilisationsgrades von Staubbeuteln unter ungünstigen klimatischen Bedingungen eine wiederholte Behandlung von Pflanzen mit dem Sterilisationsmittel in der fünften und/oder sechsten Periode der Organogenese verwirklicht.

# INTERNATIONAL SEARCH REPORT

International Application No PCT/SU 88/00053

**I. CLASSIFICATION OF SUBJECT MATTER** (if several classification symbols apply, indicate all) [6]

According to International Patent Classification (IPC) or to both National Classification and IPC

IPC[4] - A 01 N 29/02

**II. FIELDS SEARCHED**

Minimum Documentation Searched [7]

| Classification System | Classification Symbols |
|---|---|
| IPC[4] | A 01 H 1/04, A 01 N 29/02 |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | Khimicheskaya promyshlennost. Seria Iodobromnaya promyshlennost. Proizvodstvo bromosoderzhaschikh produktov dlya Khimicheskikh sredstv zaschity rasteny. Obzornaya informatsia. 1984, NIITEKHIM (Moscow), pages 8-13 | 1-4 |
| A | SU, A1, 635928, (Vsesojuzny ordena Lenina i ordena Druzhby narodov nauchno-issledovatelsky institut rastenievodstva im. N.N. Vavilova et al.)10 December 1978 (10.12.78) | 1-3 |
| A | N.N. Melnikov et al. "Khimia gerbitsidov i regulytorov rosta rasteny", 1962, GKhI (Moscow), pages 66, 69 | 1 |
| A | L. Dzh. Nikell "Regulyatory rosta rasteny"., 1984, Kolos, (Moscow), pages 30-31 (cited in the description) | 1 |
| A | Plant Breeding Reviews, edited by Jules Janick Purdue University, vol. 3, 1985, AVI Publishing Company, Inc. (Wesport, Connecticut, USA), pages 169-186 | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 11 October 1988 (11.10.88) | 16 December 1988 (16.12.88) |
| **International Searching Authority** | **Signature of Authorized Officer** |
| ISA/SU | |